Europäisches Patentamt

(19) European Patent Office

Office européen des brevets

(11) Publication number: **0 076 298**
**B1**

# (12) EUROPEAN PATENT SPECIFICATION

(45) Date of publication of patent specification: **19.12.84**

(51) Int. Cl.³: **A 23 B 4/00**

(21) Application number: **82901165.9**

(22) Date of filing: **15.04.82**

(86) International application number:
**PCT/NO82/00022**

(87) International publication number:
**WO 82/03533 28.10.82 Gazette 82/26**

(54) METHOD FOR ENZYME MATURING OF FISH.

(30) Priority: **15.04.81 NO 811317**

(43) Date of publication of application:
**13.04.83 Bulletin 83/15**

(45) Publication of the grant of the patent:
**19.12.84 Bulletin 84/51**

(84) Designated Contracting States:
**AT BE CH DE FR GB LI LU NL SE**

(56) References cited:
**DE-C-1 001 575**
**GB-C- 546 207**
**GB-C- 546 214**
**NO-B- 124 811**
**NO-B- 131 629**
**SE-B- 130 494**
**SE-B- 369 664**
**SE-B- 394 242**

(73) Proprietor: **OPSHAUG, Kjell Rolf**
**Singasteinvn. 4**
**N-Oslo 1 (NO)**

(72) Inventor: **OPSHAUG, Kjell Rolf**
**Singasteinvn. 4**
**N-Oslo 1 (NO)**

(74) Representative: **Burman, Tore et al**
**Bergling & Sundbergh AB P.O. Box 7645**
**S-103 94 Stockholm (SE)**

(56) References cited:
**"Livsmedelsteknik" October 1977, Vol. 19, No.7**
**M. KIESVAARA "Mogning av saltad fisk" p 351-353**
**Chemical Abstract Vol. 63, 1965, 10578g**
**Chemical Abstract Vol. 70, 1969, 36515f**
**Chemical Abstract Vol. 75, 1971, 97357f**
**Chemical Abstract Vol. 85, 1976, 141449v see last lines**
**Technical Research Centre of Finland, Materials and Processing Technology Publication 10, Martti Kiesvaara, p. 10-12**

Courier Press, Leamington Spa, England.

## Description

The present invention concerns a method for rapid enzyme maturing of fish, particularly herring, in which the biochemical reaction conditions in the herring muscle tissue (fillet) is optimized by controlling the parameters that are vital for the course and speed of the reaction.

The methods in use at the present time for the production of fermented fish products such as salted herring and pickled herring are both cumbersome and time consuming, or the additives used in the process are not allowed in accordance with the Food Industry Act.

In the conventional and commonly used process for salt maturing of e.g. pickled herring, the usual method consists in cutting off the herring head and then placing the fish in barrels with successive addition of 12—15% salt, 0—8% sugar, natural mixtures and sometimes saltpetre in order to attain a colour reaction.

The salt is used mainly for preserving. The high salt concentration causes the proteins to denature with liberation of water. The herring then becomes stiff.

In order to obtain a satisfactory consistency and taste, the herring needs a maturing period of 3 to 7 months. During this time the protein molecules are broken down by enzymes that are present, into water soluble compounds, whereby the smooth consistency and aroma typical for this product is obtained.

The salt content of the edible parts of the herring, i.e. the fillet, is in this condition too concentrated for direct consumption. The salt content must, therefore, be reduced by leaching with water to 5—8%, preferably 6%, salt in the fillet in order to make it edible.

By further processing of pickled herring to e.g. small fillets of pickled herring special attention must be paid to the salt content of the fillet by admixture of salt to the spiced sauce.

Further processing of the herring results in large amounts of salty fillet waste. This cannot be used, thus further processing of conventional decapitated pickled herring results in great waste problems.

It is well known that enzymes from the herrings viscera and in particular from the appendix are responsible for the biochemical maturing processes occurring in the herring.

The rate at which the enzymes break down herring muscle tissue is influenced by several factors, but particularly by the salt content and temperature of the ambient medium. Increased salt content has an inhibitive effect, whereas an increase of temperature accelerates the reactions within certain limits.

Several methods are previously known for controlling the maturing process of the herring.

Thus, from Norwegian Patent No. 131629 a method is known which is characterized by adding to the herring a chemically cleaned and dried enzyme preparation (enzyme concentrate) derived from fish viscera, the added amount of enzyme preparation being 0.1—5.0 kg per 100 kg of herring. It is evident that the aim of the invention is to control the maturing process when the raw material is caught during the time of year when there is too little enzyme activity in the viscera of the herring to enable a normal maturing. From the description it is also clear that the maturing is accomplished by using the traditional amounts of salt, sugar and saltpetre.

The described method has considerable drawbacks. The process for the production of the enzyme preparation is both complicated and expensive. Besides, no advantages are gained in the finished product seen in relation to products obtained by conventional methods. Thus, the product has to be leached with water before use, and further processing results in the same amounts of waste products.

From Norwegian Patent No. 1248811 a method is known for salting and maturing of fish, in which the most important aim is to achieve a product with a salt content suitable for direct consumption.

The invention is characterized thereby that the maturing takes place in a brine which apart from a salt content of 8—20% also contains up to 3% delta-lactone of gluconic acid. The distinct drawback of the method is demonstrated thereby that the addition of delta-lactone of gluconic acid to nutrients is not permitted by the law.

It is the object of the present invention to avoid the drawbacks of the conventional methods as well as of the more recent methods of maturing fish, particularly herring.

Thus, the objects of the invention are to achieve:

— A rational production with a marked reduction of the long maturing period characteristic of both the conventional method and the more recent methods, from a period of up to 7 months to a period of about 24 hours.
— An improved utilization of the resources by enabling byproducts such as roe and milt to be used as human food and other wastes to be used as a valuable fodder product, in particular for breed fish.
— A direct production of a ready for consumption fillet product having an adequate salt content, which preferably is 6%.
— A steady employment in the production, without peaks resulting from seasonal variations in the fishing.
— A higher degree of processing of the raw materials for further processing.

According to the invention these objects are achieved by there being used as raw material a frozen or salted skinned fillet or similar parts of frozen herring. This implies that byproducts and waste products are removed in a fresh condition before the salting and maturing process is started.

Simultaneously the basis is laid for the subsequent high speed process inasmuch as only those parts of the herring which will constitute the finished product, i.e. the fillets, take part in the process.

On the basis of the content of water and dry material in the fillets a predetermination is made of the additives required to give the desired degree of maturation, salt content, sugar content and spice flavor in the finished matured product.

Firstly, this involves that the amounts of enzyme preparation, salt and other substances added to the reaction medium, i.e. the brine, are calculated on the basis of the total water content in herring and brine, the dissolved substances being evenly distributed in the total amount of water by the time when the quality of the product is optimal and the maturing process is stopped by deep-freezing or inactivation of the enzymes in manner known per se.

However, an optimal reaction rate presupposes an optimal diffusion rate for all substances supposed to diffuse into the cellular tissue and take part in the fermenting and flavouring process.

These conditions are fulfilled in accordance with the invention by the above-mentioned deep-freezing of the raw material before the process is started and or by use of a high vacuum—at the latest at the time when the fillet is exposed to the brine. Salt saturating can also be used. Thereby, cell bursting is achieved in the tissue, and this increases the diffusion rate considerably. Furthermore, all physical obstacles to penetration of the substances, such as skin and other membranes, are removed, so that the cleaned fillet is exposed directly to the brine, in which the substances which are to penetrate into the fillet, are supposed to be present in a dissolved condition or in any other state in which they are easily available, e.g. colloidally dispersed.

The enzyme amount necessary to catalyze the biochemical degradation processes in the conventional method of maturing herring is given by the natural content of digestive enzymes in the herring. These enzymes are found especially in the appendix of the herring of the quality normally used for salted herring and pickled herring and remain in the herring during the salting.

This means that the maturing process of the invention is catalyzed by the amount of appendix accumulated during the fileting operation. This amount or a corresponding amount of appendix from other fish can be preserved in a frozen state until required. This amount is then later used in the natural state and in the same proportion as normally found in the herring. Alternatively, corresponding amounts of commercially available protolytic enzymes or enzyme preparations as determined by standard measuring methods can be used.

By adding the appendixes directly to the brine in the natural state, preferably in a colloidally dispersed state or other easily available state, the enzymes are instantly dissolved in the brine. Thus the degradation processes can commence immediately at the upper surface of the fillets. Simultaneously, however, according to the invention the salt concentration at the upper surface of the fillets will be at a maximum and consequently also the salt denaturation of the proteins. Thereby, the enzyme activity will be slowed down and kept in balance so that the cellular tissue will not decompose at said upper surface.

The surprising effect of the invention is due to the fact that the balance is best achieved with the salt content in the ambient medium which gives the finished matured fillet product the preferred salt content of about 6%.

For further control of the rate of the maturing process and in order to minimize the growth of microorganisms the temperature of the ambient medium is reduced to less than 10°C, preferably to less than 5°C, before the enzyme preparation is added.

Since the salt molecules are smaller than the other molecules disperse and ion disperse substances that are of importance in the process, the former will penetrate into the tissue first, if they are not already present and will gradually denature the proteins.

Then the much larger enzyme molecules will penetrate and denature the proteins to a sufficient extent to achieve the typical smooth consistence and aroma.

In this way the balance between the denaturing effect of the electrolytes on the proteins and the solubilizing effect of the enzymes on said proteins is maintained throughout the fillets during the maturation period.

Simultaneously, also a biological balance is maintained. The electrolyte concentration is not sufficiently high to prevent growth of microorganisms, but in combination with the low temperature needed to control the enzyme activity, growth of unwanted microorganisms is kept down during the short maturation period of 1—5 days. The particular fact that salt as described penetrates into the fillet and denatures the proteins before the larger enzyme molecules do, implies that, according to the invention and as already mentioned, there may be used a salt preserved, but non-matured raw material.

The salt content in the fillet at the beginning of the process is higher than at the end of the process, since all soluble substances are then evenly distributed in the water. In accordance with the invention the total salt content in the total amount of water present is a decisive factor for the end result.

The risk of uneven maturing can be avoided by keeping the temperature of the ambient medium sufficiently low to substantially slow down the degradation process or to stop them until the salt content, the water content and the enzyme concentration are evened out, whereupon the temperature is raised, and the biochemical changes occur as prescribed. The following example illustrates a typical practical embodiment of the method of the invention:—

10 kg of frozen skinned fillet of herring containing 60% water was added to a brine containing 600 g of defrozen and finely divided Pylorus caecea (appendixes) having been removed from the herring after filleting and frozen. 1600 g of salt, 800 g of sugar and seasoning extracts in 10 liters of water had previously been dissolved in the brine. After standing for 5 days at 3°C the herring was fully matured and had a smooth consistence and a good aroma. The fillets of pickled herring were frozen and were later tested by "Hermetikkindustriens Kontrollinstitutt" (The Control Institute for the Canning Industry) in the town of Stavanger, and were rated as "good products". Due to the low salt content of 5,9%, the herring was later classified as "well suited for direct consumption".

The same test has been repeated a number of times both with natural and finely divided Pylorus cacea from various sorts of fish, and even with commercially available proteolytic enzyme preparations.

The enzyme concentration and temperature of the ambient medium influence the maturing period within certain limits. A maturing period down to 24 hours has been achieved for salted herring, by optimizing these parameters.

The enzyme quality used is significant to some extent for the sort of taste to be achieved, but that parameter is not critical for the practical use of the invention.

## Claims

1. A method of enzymatic high speed ripening of fish, particularly herring, characterized by the combination of making the cellular tissue of the fish open to diffusion by freezing, vacuum treatment or salt saturation and by removal of body parts, preferably to form a trimmed and skinned fillet; adding to the fish an amount of salt and sugar to give from 4 to 8%, preferably 6%, of salt and from 0 to 8% of sugar in the muscle tissue of the fillets, based on a presumed even distribution thereof in the total amount of water in muscle tissue and brine; adding to the fillets the enzymes needed for the ripening process in the form of viscera, particularly appendixes (Pylorus caecae) in a natural, preferably finely divided form, or in the form of commercially available water soluble proteolytic enzymes or enzyme preparations; optionally adding other substances assumed to penetrate into the cellular tissue in a dissolved or easily soluble form; maintaining the temperature of fish and brine between —10°C and 10°C for a period not less than 24 hours and not much longer than 5 days; and then disrupting the enzyme activity such as by deep-freezing or chemical inactivation.

2. A method according to claim 1, characterized by the steps of maintaining the fish and brine at a temperature in the lower part of said temperature range of —10°C to 10°C, at which the enzyme activity is low, until the salt and enzyme contents become the same in the fish and the brine and then increasing the temperature to a higher level within said temperature range and maintaining that temperature level until the enzyme activity is disrupted.

## Patentansprüche

1. Verfahren zur enzymatischen Reifung von Fisch, besonders Hering, mit hoher Geschwindigkeit, gekennzeichnet durch die Kombination der Maßnahmen, gemäß denen man das Zellgewebe des Fisches durch Gefrieren, Vakuumbehandlung oder Salzsättigung und durch Entfernung von Körperteilen, vorzugsweise unter Bildung eines ausgeputzten und enthäuteten Filets, für Diffusion offenmacht, dem Fisch eine Menge an Salz und Zucker zusetzt, um 4 bis 8%, vorzugsweise 6%, Salz und 0 bis 8% Zucker in dem Muskelgewebe der Filets, bezogen auf ihre angenommene gleichmäßige Verteilung in der gesamten Wassermenge in dem Muskelgewebe und der Salzlösung, zu ergeben, zu den Filets die für den Reifungsprozeß benötigten Enzyme in der Form von Eingeweiden, besonders Bilddärmen (Pylorus caecae) in einer natürlichen, vorzugsweise fein zerteilten Form, oder in der Form handelsüblicher wasserlöslicher proteolytischer Enzyme oder Enzympräparate zugibt, gegebenenfalls andere Substanzen, von denen man annimmt, daß sie in das Zellgewebe eindringen, in gelöster oder leicht löslicher Form zusetzt, die Temperatur von Fisch und Salzlösung zwischen —10°C und 10°C während einer Zeitdauer von nicht weniger als 24 Stunden und nicht viel länger als 5 Tagen hält und dann die Ezymaktivität beispielsweise durch aktive Kühlung oder chemische Inaktivierung, unterbricht.

2. Verfahren nach Anspruch 1, gekennzeichnet durch die Stufen, gemäß denen man den Fisch und die Salzlösung auf einer Temperatur im unteren Teil des Temperaturbereiches von —10°C bis 10°C, bei der die Enzymaktivität gering ist, hält, bis der Salz- und Enzymgehalt in dem Fisch und der Salzlösung der gleiche wird, und sodann die Temperatur auf einen höheren Wert in dem genannten Temperaturbereich steigert und diesen Temperaturwert hält, bis die Enzymaktivität unterbrochen wird.

## Revendications

1. Procédé de maturation enzymatique rapide de poisson notamment d'hareng, caractérisé en ce qu'il consiste en combinaison à permettre une diffusion dans le tissu cellulaire du poisson par congélation, traitement sous vide ou saturation de sel et par élimination de parties du corps, pour former, de préférence, un filet ébarbé et paré, à ajouter au poisson une quantité de sel et de sucre pour avour d'environ 4 à 8%, de préférence 6% de sel et d'environ 0 à 8% de sucre dans le tissu des muscles des filets, ladite quantité étant calculée sur une répartition supposée uniforme de la quantité totale d'eau dans le tissu des muscles et de saumure, à ajouter aux filets les enzymes nécessaires au processus de maturation sous forme de viscère, notamment d'appendices (Pylorus caecae) dans un état naturel, de préférence finement divisé ou sous la forme d'enzymes protéolytiques solubles dans l'eau disponibles dans le commerce ou de préparations d'enzymes, à ajouter facultativement d'autres substances qui sont supposées pénétrer dans la tissu cellulaire sous une forme dissoute ou facilement soluble, à maintenir la température du poisson et de la saumure entre —10°C et 10°C pendant und durée qui n'est pas inférieure à 24 heures et pas trop supérieure à 5 jours et à interrompre ensuite l'activité de l'enzyme par congélation intense ou inactivation chimique.

2. Procédé selon la revendication 1, caractérisé en ce qu'on maintient le poisson et la saumure dans la partie inférieure de la gamme de température de —10°C à 10°C à laquelle l'activité de l'enzyme est faible jusqu'à ce que les contenus en sel et en enzyme deviennent identiques dans le poisson et dans la saumure et on augmente ensuite la température à un niveau supérieur dans ladite gamme de température et on maintient ce niveau de température jusqu'à ce que l'activité de l'enzyme soint interrompue.